# EUROPÄISCHE PATENTSCHRIFT

(11) **EP 3 665 496 B1**
(45) Veröffentlichungstag und Bekanntmachung des Hinweises auf die Patenterteilung: **08.12.2021**
(21) Anmeldenummer: 18742453.6
(22) Anmeldetag: 13.07.2018
(51) Int. Cl.: G01S 7/497, G01S 7/40

(54) **VERFAHREN ZUR JUSTIERUNG MINDESTENS EINES TARGETS AN EINER JUSTIERVORRICHTUNG**
METHOD FOR ADJUSTING AT LEAST ONE TARGET ON AN ADJUSTING DEVICE
PROCÉDÉ PERMETTANT D'AJUSTER AU MOINS UNE CIBLE SUR UN DISPOSITIF D'AJUSTEMENT

(30) Priorität: 11.08.2017 DE 102017214014
(43) Veröffentlichungstag der Anmeldung: 17.06.2020
(73) Patentinhaber: Beissbarth GmbH, 80993 München (DE)
(72) Erfinder: WURM, Christian, 81667 München (DE); MITTERMÜLLER, Karl-Heinz, 85101 Lenting (DE); GLASSL, Christoph, 85095 Denkendorf (DE); SEIDEL, Michael, 81247 München (DE); DIETMAYER, Andreas, 86947 Weil (DE)
(74) Vertreter: Schmitt-Nilson Schraud Waibel Wohlfrom Patentanwälte Partnerschaft mbB
(86) Internationale Anmeldenummer: PCT/EP2018/069097
(87) Internationale Veröffentlichungsnummer: WO 2019/029948

(56) Entgegenhaltungen:
- EP-A1- 1 001 274
- EP-A2- 0 984 297
- DE-A1-102004 020 436
- DE-U1-202015 106 939

## Beschreibung

Die Erfindung betrifft ein Verfahren zur Justierung mindestens eines Targets an einer Justiervorrichtung gemäß der Gattung des Patentanspruchs 1 .

Aus dem Stand der Technik sind zahlreiche Variationen von Justiervorrichtungen bekannt. Solche Justiervorrichtungen umfassen in der Regel ein verfahrbares Gestell, an welchem zumindest eine Haltevorrichtung für mindestens ein Target angeordnet ist. Das mindestens eine Target wird verwendet, um mindestens eine am Fahrzeug verbaute Messvorrichtung zu justieren. Vor der Justierung der mindestens einen am Fahrzeug verbauten Messvorrichtung wird die Justiervorrichtung beabstandet zum korrespondierenden Fahrzeug aufgestellt und ausgerichtet, an welchem eine mit dem mindestens einen Target zu justierende Messvorrichtung verbaut ist. Zudem wird das Fahrzeug selbst für die Justierung vorbereitet, indem Hilfsmitteln, wie beispielsweise Messspiegel, Winkelmessgeber usw., am Fahrzeug angebracht werden. Diese bekannten Justiervorrichtungen werden beispielsweise zur Justierung von Radarsensoren eines automatischen Abstandshaltesystems und/oder zur Kalibrierung von Bildsensoren eines Spurhalteassistenzsystems verwendet.

Aus der DE 198 57 871 C1 ist eine Vorrichtung zum Justieren eines Abstands-Radarsensors, welcher Bestandteil einer automatischen Distanz-Regelung ist, an einem Kraftfahrzeug bekannt. Die Vorrichtung umfasst eine Punktlaserstrahlquelle, welche auf einem Gestell angeordnet ist, das vor dem Kraftfahrzeug derart in Position zu bringen ist, dass der Laserstrahl der Punktlaserstrahlquelle auf einen am Abstands-Radarsensor senkrecht zur Ausbreitungsrichtung des Radarstrahls angeordneten Spiegel gerichtet ist, der Laserstrahl der Punktlaserstrahlquelle durch Ausrichten des Gestells einstellbar ist, und mit einer Versteileinrichtung am Abstands-Radarsensor, um den Abstands-Radarsensor um eine horizontale und vertikale Achse zu verstellen. Hierbei sind zwei hintere an den Hinterrädern des Kraftfahrzeugs angeordnete Winkelgebereinheiten, deren Winkelgeber eine Null-Ausrichtung parallel zur Radebene des betreffenden Hinterrades und in Fahrtrichtung des Kraftfahrzeuges haben, zwei vordere Winkelgebereinheiten, welche vor dem Kraftfahrzeug auf dem Gestell angeordnet sind, und deren Winkelgeber eine Null-Ausrichtung parallel zu einander und entgegen der Fahrtrichtung des Kraftfahrzeuges haben, und eine Auswertungseinrichtung vorgesehen, welche in an sich bekannter Weise aus den Ausgangssignalen der Winkelgeber der Winkelgebereinheiten die Einzelwinkel vorne links und rechts zur geometrischen Fahrachse berechnet. Hierbei ist der Laserstrahl der Punktlaserstrahlquelle durch Ausrichten des Gestells entlang der Winkelhalbierenden des Gesamtspurwinkels der Hinterräder einstellbar, wobei der Abstands-Radarsensor durch die Versteileinrichtung verstellbar ist, bis der vom senkrecht zur Ausbreitungsrichtung des Radarstrahls am Abstands-Radarsensor angeordnete Spiegel reflektierte Laserstrahl mit dem von der Punktlaserstrahlquelle abgegebenen Laserstrahl zusammenfällt.

DE 20 2015 106939 U1 offenbart eine Vorrichtung zur Kalibrierung wenigstens eines Radarsensors mit einer in einem definierten Abstand im rechten Winkel zur Fahrzeuglängsachse mittig vor einem Fahrzeug mit wenigstens einem, vorzugsweise in dessen Fahrzeugfront integrierten, Radarsensor zu positionierenden Kalibrierungstafel. An dieser Kalibrierungstafel ist eine Winkelverstellplatte derart winkelverstellbar einhängbar, dass eine ferromagnetische Befestigungsplatte der Winkelverstellplatte in ihrem Anstellwinkel verstellbar ist.

Der Erfindung liegt die Aufgabe zu Grunde, ein Verfahren zur Justierung mindestens eines Targets an einer Justiervorrichtung bereitzustellen, welches ohne zusätzliche Vorbereitungen am Fahrzeug selbst schnell und einfach an beliebigen Orten durchgeführt werden kann.

Erfindungsgemäß wird die Aufgabe durch Bereitstellung eines Verfahrens zur Justierung mindestens eines Targets an einer Justiervorrichtung mit den Merkmalen des Patentanspruchs 1 gelöst. Vorteilhafte Ausführungsformen und Weiterbildungen der Erfindung sind in den abhängigen Ansprüchen angegeben.

Um ein Verfahren zur Justierung mindestens eines Targets an einer Justiervorrichtung bereitzustellen, welches ohne zusätzliche Vorbereitungen am Fahrzeug selbst schnell und einfach an beliebigen Orten durchgeführt werden kann, wird das mindestens eine Target und eine Laserquelle an der Justiervorrichtung montiert. Dabei wird die Laserquelle so an einer vorgegebenen Position an dem mindestens einen Target montiert, dass sie das mindestens eine Target zumindest teilweise überdeckt. Anschließend wird eine vertikale Laserlinie mit der Laserquelle erzeugt und ausgegeben. Basierend auf der ausgegebenen vertikalen Laserlinie wird eine horizontale Position des mindestens einen Targets und der Laserquelle über eine Versteilvorrichtung so eingestellt, dass sich die ausgegebene vertikale Laserlinie und eine am Fahrzeug vorhandene vertikale Referenzlinie überdecken.

Dann wird die Laserquelle um 90° gedreht, um mit der Laserquelle eine horizontale Laserlinie zu erzeugen und auszugeben. Über eine Verstellvorrichtung wird eine vertikale Position des mindestens einen Targets und der Laserquelle so eingestellt, dass sich die ausgegebene horizontale Laserlinie und eine am Fahrzeug vorhandene horizontale Referenzlinie überdecken.

Anschließend wird die Laserquelle von der Justiervorrichtung demontiert und das justierte mindestens eine Target kann zur Kalibrierung und Justierung der korrespondierenden am Fahrzeug verbauten Messvorrichtung verwendet werden.

Unter der Justiervorrichtung wird im Folgenden eine Vorrichtung verstanden, welche ein verfahrbares oder festes Gestell umfasst, an welchem zumindest eine Haltevorrichtung für mindestens ein Target angeordnet ist. Zudem weist das Gestell Mittel auf, mit welchen das Gestell winkelrichtig und abstandsrichtig zum Fahrzeug aufgestellt und ausgerichtet werden kann.

Unter dem mindestens einen Target wird nachfolgend eine bedruckte Tafel verstanden, auf welcher bestimmte farbige und/oder schwarz-weiße Muster aufgebracht sind, welche geeignet sind, um die mindestens eine am Fahrzeug verbaute Messvorrichtung zu justieren bzw. zu kalibrieren. Vorzugsweise ist das mindestens eine Target ein Laserscanner-Target, welches verwendet wird, um einen am Fahrzeug verbauten Laserscanner zu justieren. Bei Ausführungsformen des erfindungsgemäßen Verfahrens zur Justierung mindestens eines Targets an einer Justiervorrichtung erfolgt die Ausrichtung und Justierung des Targets auf das Fahrzeug mittels Laserlinien, welche vom Target ausgehen und an definierten Stellen des Zielfahrzeugs zu erscheinen haben. Am Fahrzeug selbst sind in vorteilhafter Weise keiner weiteren Maßnahmen erforderlich, da bereits am Fahrzeug vorhandene Kanten und/oder Linien als Referenzlinien bei der Ausrichtung und Justierung des Targets verwendet werden. Ausführungsformen des erfindungsgemäßen Verfahrens zur Justierung mindestens eines Targets an einer Justiervorrichtung werden nur zur Ausrichtung und Justierung des Targets selbst und nicht zur Justierung der korrespondierenden Messvorrichtung verwendet. Das Verfahren zur Justierung der Messvorrichtung wird erst im Anschluss an das erfindungsgemäße Verfahren zur Justierung mindestens eines Targets an einer Justiervorrichtung mit einem dann ordnungsgemäß ausgerichteten und justierten Target durchgeführt.

Da zur Durchführung des erfindungsgemäßen Verfahrens zur Justierung mindestens eines Targets an einer Justiervorrichtung aufgrund der einfachen Anordnung des mindestens einen Targets und der Laserquelle an der Justiervorrichtung ein überschaubarer Aufwand erforderlich ist, kann das Verfahren auch in Kundendienstwerkstätten durchgeführt und unter Verwendung der Laserquelle auch mit aus dem Stand der Technik bekannten Justiervorrichtungen durchgeführt werden. Die vertikale und horizontale Ausrichtung des Targets kann in einer beliebigen Reihenfolge durchgeführt werden, d.h. das Target kann zuerst in horizontaler und dann in vertikaler Richtung ausgerichtet werden oder zuerst in vertikaler und dann in horizontaler Richtung ausgerichtet werden.

In einer vorteilhaften Ausgestaltung des erfindungsgemäßen Verfahrens kann die mindestens eine Referenzlinie einer am Fahrzeug vorhandenen horizontal und/ oder vertikal verlaufenden Kante oder Linie entsprechen. Eine solche Kante oder Linie kann beispielweise durch eine am Fahrzeug verbaute Zierleiste oder ein Karosserieteil usw. bereitgestellt werden. Zusätzlich oder alternativ kann die mindestens eine Referenzlinie einer an einer Vorderseite der Messvorrichtung vorhandenen horizontal verlaufenden Kante oder Linie entsprechen. So kann beispielsweise ein Knick oder eine aufgemalte Linie an der Vorderseite die mindestens eine Referenzlinie ausbilden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigt:
Fig. 1 eine schematische Darstellung eines Ausführungsbeispiels einer Justiervorrichtung zur Durchführung einer Justierung einer am Fahrzeug verbauten Messvorrichtung,
Fig. 2 eine schematische Darstellung einer Vorderseite einer am Fahrzeug verbauten Messvorrichtung, und
Fig. 3 ein schematisches Flussdiagramm eines Ausführungsbeispiels eines erfindungsgemäßen Verfahrens zur Justierung mindestens eines Targets an einer Justiervorrichtung aus Fig. 1 .

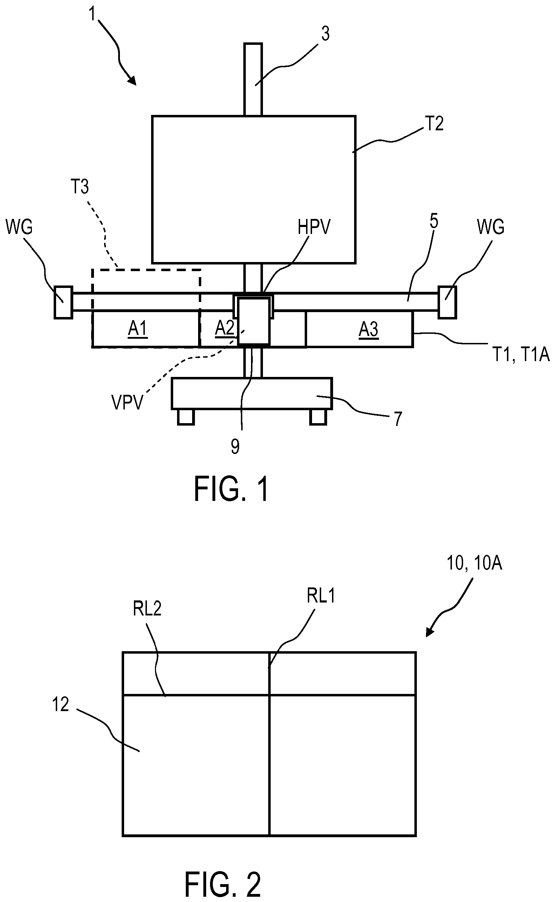

Wie aus Fig. 1 ersichtlich ist, weist das dargestellte Ausführungsbeispiel einer Justiervorrichtung 1 zur Durchführung einer Justierung einer am Fahrzeug verbauten Messeinrichtung 10, welche in Fig. 2 schematisch dargestellt ist, eine auf einem verfahrbaren Untergestell 7 befestigte Säule 3 mit einem Querträger 5 auf. Am Querträger 5 ist ein erstes Target T1 angeordnet, welches über eine erste Verstellvorrichtung HPV in horizontaler Richtung und über eine zweite Verstellvorrichtung VPV in vertikaler Richtung verschiebbar gelagert ist. Die zweite Verstellvorrichtung VPV ist im dargestellten Ausführungsbeispiel der Justiervorrichtung 1 als Teil der Säule 3 ausgeführt und nicht sichtbar. Zudem ist eine Laserquelle 9 in der Mitte der horizontalen Ausdehnung des ersten Targets T1 so angeordnet, dass die Laserquelle 9 das erste Target T1 zumindest teilweise überlappt.

Im dargestellten Ausführungsbeispiel ist das erste Target T1 als Laserscanner-Target T1A ausgeführt, welches drei Abschnitte A1, A2, A3 umfasst. Die drei Abschnitte A1, A2, A3 weisen Schwarz-Weiß-Muster auf, welche geeignet sind, die im dargestellten Ausführungsbeispiel als Laserscanner 10A ausgeführte Messvorrichtung 10 zu kalibrieren bzw. zu justieren. Die verschiedenen Abschnitte A1, A2, A3 des Laserscanner-Targets T1A können beispielsweise zur Kalibrierung bzw. Justierung von verschiedenen Teilfunktionen und/oder Baugruppen des Laserscanners 10A verwendet werden.

Wie aus Fig. 1 weiter ersichtlich ist, ist im dargestellten Ausführungsbeispiel der Justiervorrichtung 1 an beiden Enden des Querträgers 5 ein Winkelgeber WG angeordnet, welche verwendet werden können, um die Justiervorrichtung 1 winkelrichtig und abstandsrichtig in Bezug auf das korrespondierende Fahrzeug auszurichten, an welchem die mit dem mindestens einen Target T1, T1A zu justierende Messvorrichtung 10 verbaut ist. Nach dem Ausrichten der Justiervorrichtung 1 kann diese über geeignete Mittel am Boden fixiert werden.

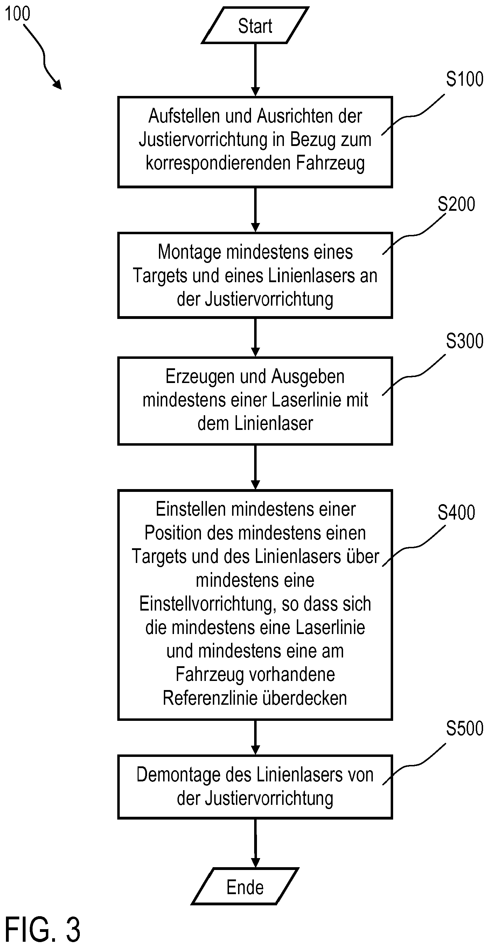

Wie aus Fig. 3 weiter ersichtlich ist, umfasst das dargestellte Ausführungsbeispiel des erfindungsgemäßen Verfahrens 100 zur Justierung mindestens eines Targets T1 an einer Justiervorrichtung 1, einen Schritt S100, in welchem die Justiervorrichtung 1 mit einem vorgegebenen Abstand zum Fahrzeug aufgestellt und ausgerichtet wird, an welchem eine mit dem mindestens einen Target T1 zu justierende Messvorrichtung 10 verbaut ist. In einem Schritt S200 wird das mindestens eine Targets T1 und eine Laserquelle 9 an der Justiervorrichtung 1 montiert. Im Schritt S300 wird mit der Laserquelle 9 mindestens eine Laserlinie erzeugt und ausgegeben. Im Schritt S400 wird mindestens eine Position des mindestens einen Targets T1 und der Laserquelle 9 über mindestens eine Verstellvorrichtung HPV, VPV so eingestellt, dass sich die ausgegebene mindestens eine Laserlinie und mindestens eine am Fahrzeug vorhandene Referenzlinie RL1, RL2 überdecken. Im Schritt S500 wird die Laserquelle 9 von der Justiervorrichtung 1 demontiert. Das mindestens eine Target T1 ist nun ordnungsgemäß ausgerichtet und justiert und kann zur Justierung bzw. Kalibrierung der mindestens einen Messvorrichtung 10 eingesetzt werden.

Bei einem bevorzugten Ausführungsbeispiel des erfindungsgemäßen Verfahrens 100 wird ein als Laserscanner-Target T1A ausgeführtes erstes Target T1 und die Laserquelle 9 an der Justiervorrichtung 1 montiert, welche beabstandet zur Fahrzeugfront aufgestellt und ausgerichtet ist, da die korrespondierende als Laserscanner 10A ausgeführte Messvorrichtung 10 an der Fahrzeugfront unterhalb eines Stoßfängers montiert ist. Das bedeutet, dass die Justiervorrichtung 1 in Abhängigkeit vom Einbauort der korrespondierenden Messvorrichtung am Fahrzeug in Bezug auf das Fahrzeug aufgestellt und ausgerichtet wird. Ist die zu kalibrierende Messvorrichtung 10 beispielsweise am Fahrzeugheck angeordnet, dann wird die Justiervorrichtung 1 beabstandet zum Fahrzeugheck aufgestellt und ausgerichtet. Die Laserquelle 9 wird an einer vorgegebenen Position am Laserscanner-Target T1A montiert und überdeckt das Laserscanner-Target T1A zumindest teilweise, wie aus Fig. 1 ersichtlich ist.

Anschließend wird eine vertikale Laserlinie mit der Laserquelle 9 erzeugt und ausgegeben. Dann wird eine horizontale Position des Laserscanner-Targets T1A und der Laserquelle 9 über eine zugeordnete erste Verstellvorrichtung HPV so eingestellt, dass sich die ausgegebene vertikale Laserlinie und eine, an der Vorderseite 12 der als Laserscanner 10A ausgebildeten Messvorrichtung 10 vorhandene vertikale Referenzlinie RL1 überdecken. Danach wird die Laserquelle 9 um 90° gedreht und eine horizontale Laserlinie mit der Laserquelle 9 erzeugt und ausgegeben. Dann wird eine vertikale Position des Laserscanner-Targets T1A und der Laserquelle 9 über eine zugeordnete zweite Verstellvorrichtung VPV so eingestellt wird, dass sich die ausgegebene horizontale Laserlinie und eine, an der Vorderseite 12 der als Laserscanner 10A ausgebildeten Messvorrichtung 10 vorhandene horizontale Referenzlinie RL2 überdecken. Alternativ kann die Reihenfolge der Justierung vertauscht werden, d.h. es kann zuerst die vertikale Position des Laserscanner-Targets T1A und dann die horizontale Position des Laserscanner-Targets T1A eingestellt werden. Nach der Justierung des Laserscanner-Targets T1A wird die Laserquelle 9 von der Justiervorrichtung 1 demontiert und das Laserscanner-Target T1A kann zur Justierung bzw. Kalibrierung der als Laserscanner 10A ausgebildeten Messvorrichtung 10 eingesetzt werden.

Bei einem alternativen nicht dargestellten Ausführungsbeispiel des erfindungsgemäßen Verfahrens 100 zur Justierung mindestens eines Targets T1, T1A kann die mindestens eine Referenzlinie RL1, RL2 einer am Fahrzeug ausgebildeten horizontal und/oder vertikal verlaufenden Kante oder Linie entsprechen. Zudem kann eine der Referenzlinien RL1, RL2 durch eine an der Vorderseite 12 der Messvorrichtung 10 ausgebildete vertikal oder horizontal verlaufenden Kante oder Linie ausgebildet werden, und eine andere der Referenzlinien RL1, RL2 kann durch eine am Fahrzeug ausgebildete vertikal oder horizontal verlaufende Kante oder Linie ausgebildet werden.

Wie aus Fig. 1 weiter ersichtlich ist, weist die Justiervorrichtung 1 noch ein zweites Target T2 auf und kann auch zur Justierung von anderen am Fahrzeug verbauten Messvorrichtungen 10 eingesetzt werden. Zudem kann das erste Target T1 durch ein gestrichelt dargestellte Target T1 zumindest teilweise überdeckt werden, wenn zur Justierung einer korrespondierenden Messvorrichtung 10 das dritte Target T3 und nicht das erste Target T1 verwendet wird. Dadurch wird klar, dass Ausführungsformen des erfindungsgemäßen Verfahrens 100 zur Justierung mindestens eines Targets T1, T1A an einer Justiervorrichtung 1 einfach mit aus dem Stand der Technik bekannten Justiervorrichtungen durchgeführt werden können.

### BEZUGSZEICHENLISTE

- 1: Justiervorrichtung
- 3: Säule
- 5: Querträger
- 5.1: Führungsschiene
- 7: verfahrbares Untergestell
- 9: Laserquelle
- HPV: erste Verstellvorrichtung
- VPV: zweite Verstellvorrichtung
- T1A: Laserscanner-Target
- T1, T2, T3: Target
- A1, A2, A3: Abschnitt
- WG: Winkelgeber
- 10: Messvorrichtung
- 10A: Laserscanner
- 12: Vorderseite
- RL1: erste (vertikale) Referenzlinie
- RL2: zweite (horizontale) Referenzlinie
- 100: Verfahren zur Justierung mindestens eines Targets
- S100 bis S500: Verfahrensschritte

## Patentansprüche

1. Verfahren (100) zur Justierung mindestens eines Targets (T1) an einer Justiervorrichtung (1), welche beabstandet zu einem Fahrzeug aufgestellt und ausgerichtet wird, an welchem eine mit dem mindestens einen Target (T1) zu justierende Messvorrichtung (10) verbaut ist, **gekennzeichnet, durch** die Schritte:
Montage des mindestens einen Targets (T1) und einer Laserquelle (9) an der Justiervorrichtung (1), wobei die Laserquelle (9) an einer vorgegebenen Position an dem mindestens einen Target (T1) montiert wird und das mindestens eine Target (T1) zumindest teilweise überdeckt;
Erzeugen und Ausgeben einer vertikalen Laserlinie mit der Laserquelle (9),
Einstellen einer horizontalen Position des mindestens einen Targets (T1) und der Laserquelle (9) über eine Verstellvorrichtung (HPV), so dass sich die ausgegebene vertikale Laserlinie und eine am Fahrzeug vorhandene vertikale Referenzlinie (RL1) überdecken,
Drehen der Laserquelle (9) um 90°;
Erzeugen und Ausgeben einer horizontalen Laserlinie mit der Laserquelle (9),
Einstellen einer vertikalen Position des mindestens einen Targets (T1) und der Laserquelle (9) über eine Verstellvorrichtung (VPV), so dass sich die ausgegebene horizontale Laserlinie und eine am Fahrzeug vorhandene horizontale Referenzlinie (RL1) überdecken,
Demontage der Laserquelle (9) von derJustiervorrichtung (1).

2. Verfahren (100) nach Anspruch 1, **dadurch gekennzeichnet, dass** die mindestens eine Referenzlinie (RL1, RL2) einer am Fahrzeug ausgebildeten horizontal verlaufenden Kante oder Linie entspricht.

3. Verfahren (100) nach einem der Ansprüche 1 oder 2, **dadurch gekennzeichnet, dass** die mindestens eine Referenzlinie (RL1, RL2) einer am Fahrzeug ausgebildeten vertikal verlaufenden Kante oder Linie entspricht.

4. Verfahren (100) nach einem der Ansprüche 1 bis 3, **dadurch gekennzeichnet, dass** die mindestens eine Referenzlinie (RL1, RL2) einer vor einer Vorderseite (12) der Messvorrichtung (10) vorhandenen horizontal verlaufenden Kante oder Linie entspricht.

5. Verfahren (100) nach einem der Ansprüche 1 bis 4, **dadurch gekennzeichnet, dass** die mindestens eine Referenzlinie (RL1, RL2) einer vor einer Vorderseite (12) der Messvorrichtung (10) vorhandenen vertikal verlaufenden Kante oder Linie entspricht.

6. Verfahren (100) nach einem der Ansprüche 1 bis 5, **dadurch gekennzeichnet, dass** ein erstes Target (T1) ein Laserscanner-Target (T1A) ist, welches zur Kalibrierung einer als Laserscanner (10A) ausgeführten Messvorrichtung (10) verwendet wird.

## Claims

1. A method (100) for adjusting at least one target (T1) on an adjusting device (1) which is set up and aligned at a distance from a vehicle on which a measuring device (10) to be adjusted with the at least one target (T1) is installed, **characterized by** the steps of:
mounting the at least one target (T1) and a laser source (9) on the adjusting device (1), the laser source (9) being mounted on the at least one target (T1) in a predetermined position and covering the at least one target (T1) at least partially;
generating and outputting a vertical laser line with the laser source (9), setting a horizontal position of the at least one target (T1) and the laser source (9) via an adjustment device (HPV) such that the vertical laser line output and a vertical reference line (RL1) present on the vehicle overlap each other;
rotating the laser source (9) by 90°;
generating and outputting a horizontal laser line with the laser source (9),
setting a vertical position of the at least one target (T1) and the laser source (9) via an adjustment device (VPV) such that the horizontal laser line output and a horizontal reference line (RL1) present on the vehicle overlap each other;
unmounting the laser source (9) from the adjusting device (1).

2. A method (100) according to claim 1,
**characterized in that** the at least one reference line (RL1, RL2) corresponds to a horizontally extending edge or line formed on the vehicle.

3. A method (100) according to any of claims 1 or 2,
**characterized in that** the at least one reference line (RL1, RL2) corresponds to a vertically extending edge or line formed on the vehicle.

4. A method (100) according to any of claims 1 to 3,
**characterized in that** the at least one reference line (RL1, RL2) corresponds to a horizontally extending edge or line present before a front side (12) of the measuring device (10).

5. A method (100) according to any of claims 1 to 4,
**characterized in that** the at least one reference line (RL1, RL2) corresponds to a vertically extending edge or line present before a front side (12) of the measuring device (10).

6. A method (100) according to any of claims 1 to 5,
**characterized in that** a first target (T1) is a laser scanner target (T1A) which is used to calibrate a measuring device (10) designed as laser scanner (10A).

## Revendications

1. Procédé (100) permettant d'ajuster au moins une cible (T1) sur un dispositif d'ajustement (1) qui est installé et orienté de manière espacée par rapport à un véhicule, sur lequel est monté un dispositif de mesure avec au moins une cible (T1) à ajuster, **caractérisé en ce qu'**il comprend les étapes suivantes :
montage de la cible (T1), une au moins, et d'une source laser (9) sur le dispositif d'ajustement (1), sachant que la source laser (9) est montée en une position prédéfinie sur la cible (T1), une au moins, et chevauche au moins partiellement la cible (T1), une au moins ;
production et émission d'une ligne laser verticale avec la source laser (9) ;
réglage d'une position horizontale de la cible (T1), une au moins, et de la source laser (9) via un dispositif de déplacement (HPV), de sorte que la ligne laser verticale émise et une ligne de référence verticale, présente sur le véhicule (RL1), se chevauchent ;
rotation de la source laser (9) de 90° ;
production et émission d'une ligne laser horizontale avec la source laser (9) ;
réglage d'une position verticale de la cible (T1), une au moins, et de la source laser (9) via un dispositif de déplacement (VPV), de sorte que la ligne laser horizontale émise et une ligne de référence horizontale, présente sur le véhicule (RL1), se chevauchent ;
démontage de la source laser (9) du dispositif d'ajustement (1).

2. Procédé (100) selon la revendication 1, **caractérisé en ce que** la ligne de référence (RL1, RL2), une au moins, correspond à une arête ou une ligne s'étendant de manière horizontale, formée sur le véhicule.

3. Procédé (100) selon i'une quelconque des revendications 1 ou 2, **caractérisé en ce que** la ligne de référence (RL1, RL2), une au moins, correspond à une arête ou une ligne s'étendant de manière verticale, formée sur le véhicule.

4. Procédé (100) selon l'une quelconque des revendications 1 à 3, **caractérisé en ce que** la ligne de référence (RL1, RL2), une au moins, correspond à une arête ou une ligne s'étendant de manière horizontale, présente devant une face avant (12) du dispositif de mesure (10).

5. Procédé (100) selon l'une quelconque des revendications 1 à 4, **caractérisé en ce que** la ligne de référence (RL1, RL2), une au moins, correspond à une arête ou une ligne s'étendant de manière verticale, présente devant une face avant (12) du dispositif de mesure (10).

6. Procédé (100) selon l'une quelconque des revendications 1 à 5, **caractérisé en ce qu'**une première cible (T1) est une cible de scanner laser (T1A) qui est utilisée pour l'étalonnage d'un dispositif de mesure (10) réalisé en tant que scanner laser (10A).
